# EUROPEAN PATENT SPECIFICATION

(11) **EP 0 647 811 B1**
(45) Date of publication and mention of the grant of the patent: **26.08.1998**
(21) Application number: 94830482.9
(22) Date of filing: 11.10.1994
(51) Int. Cl.: F16L 55/10, F16L 27/04, F16L 39/00

(54) **A device for the connection of fluid pipelines to relative delivery appliances**
Vorrichtung zum Anschliessen einer Flüssigkeitsleitung an einem Abgabesystem
Dispositif de connexion d'une canalisation de fluide à un système d'alimentation

(30) Priority: 12.10.1993 IT BO930398
(43) Date of publication of application: 12.04.1995
(73) Proprietor: Frascaroli, Franco, I-40133 Bologna (IT); Fiumi, Piero, I-40133 Bologna (IT)
(72) Inventor: Frascaroli, Franco, I-40133 Bologna (IT); Fiumi, Piero, I-40133 Bologna (IT)
(74) Representative: Lanzoni, Luciano

(56) References cited:
- EP-A- 0 100 205
- WO-A-92/01187
- US-A- 1 810 735
- US-A- 4 116 475
- US-A- 4 899 792

## Description

The present invention relates to a device in combination with a fluid pipeline and a delivery appliance. Such a device according to the preamble of claim 1 in disclosed in US-A 4 899 792. Given that the device according to the present invention is advantageously suitable for application in the art field of fuel vending and filling stations generally, reference will be made throughout the specification to this same field of use, and in particular to adoption of the device as a means whereby the flexible hose associated with a familiar "petrol pump" is connected to the relative gun; the descriptive content of the disclosure is thus simplified, albeit implying no limitation of the invention whatever.

It is a principal requirement in any type of piped delivery system to avoid the risk that a failure or rupture even of one component part might result in leakage of the conveyed liquid.

In the particular instance, for example, of hoses and guns used typically to dispense fuels such as petrol or diesel, it is important to make provision for the eventuality that the line carrying the fuel from the pump to the gun may fail or break. Neither is it unreasonable to envisage trouble of this kind occurring at installations of the type in question; it happens often enough, for example, especially in self-service filling stations, that when a user has filled up with fuel, the gun is left accidentally in the filler neck of the vehicle fuel tank and the vehicle then driven off, dragging the gun forward and subjecting the gun-and-hose assembly to tensile and bending stresses of notable intensity, indeed sufficient to break the connection between gun and hose: the ensuing and inevitable consequence is a leakage of fuel, hence the risk of fire and serious damage to the environment.

The hose line in question must in fact be suitably long and flexible, and easy to handle, so that the degree of strength obtainable in construction is limited. It therefore becomes necessary to reduce the stresses to which the hose may be subjected, or to incorporate a safety feature whereby the flow of fuel can be cut off in the event of the hose line breaking.

To reduce stresses while at the same time enhancing the practical advantages of the self-service pump, recourse has been made to a ball-and-socket type of fitting interposed between the gun and the hose.

Considering the entire length of the hose line, in effect, the point that tends to be subjected to the greatest bending stresses is precisely that of the connection to the gun. It is difficult to establish an optimum angle between the hose and the gun at their point of connection with a view to reducing stresses, since the angle in the at-rest position, when the gun is attached to the pump, differs from the angle assumed in the delivery position when the gun is inserted into the filler neck of a vehicle fuel tank.

A further method of addressing the problem consists in the use of "antijerk" devices, which are able to shut off the flow of fuel in the event of the gun being tugged suddenly and forcibly from the hose, as occurs on occasion in the circumstances already intimated: i.e. when a motorist moves off with the gun still delivering fuel into the vehicle tank.

Such a device takes the place of the aforementioned ball-and-socket fitting and is structured in such a manner that the application of a sufficiently high tensile or bending stress will force one component part of the antijerk assembly to fail, the effect of which being to shut off the passage through the hose. The pertinent prior art embraces a device of the type in question made by the Swedish company MALTE PRODUKTER AB, Bultgatan 6, S30244 Halmstad, Sweden; this is calibrated to a preferred breaking point at which failure will be guaranteed to occur under predetermined tensile and bending loads, and incorporates a device or valve designed to shut off the flow of fuel at the moment of failure, thereby preventing any undesirable escape of fluid.

Even without advancing any further comment on the precise structure of the antijerk device, it will be evident that the realization of a single device combining the two systems described thus far is currently impossible, using the solutions hitherto afforded by the prior art and mentioned above.

The impossibility of connecting the conventional devices in question, i.e. a ball-and-socket fitting and an antijerk device, derives basically from the fact that the response of the antijerk system is inhibited or at all events drastically reduced by the ball-and-socket arrangement. Indeed the purpose of the ball-and-socket fitting is to eliminate or at least attenuate bending-related forces, so that the only stress to which the antijerk device would effectively be exposed can be a tensile load, and this of itself will not be of an order sufficient to guarantee the failure of the weakened component and the activation of the antijerk system in the prescribed manner.

The antijerk device might be reproportioned in such a way as to ensure its response even when utilized in conjunction with the ball-and-socket fitting, although in this instance the device could become unduly sensitive to bending stresses.

The object of the present invention is to provide a device capable of operating correctly in accordance with both of the principles described above, while at the same time simple in design, inexpensive and easy to use.

The stated object is realized in a device in combination with a fluid pipeline and a delivery appliance as defined in claim 1. A device comprises a ball-and-socket fitting composed of a first outer connecting member, and a tubular member of which one end affords a spherical head accommodated to a fluid tight fit internally of the first connecting member and the remaining end terminates in a sleeve designed to accommodate a tubular shank of a second connecting member, likewise in a fluid-tight fit; in that the sleeve and the second connecting member form two parts of a pull-release safety device, associated one with another by means designed to yield elastically and allow a mutual separation of the two parts when subjected to a tensile overload of predetermined value; and, in that it further comprises valve means located internally of the second connecting member, by which the selfsame second connecting member is shut off and sealed fluid-tight when separated from the sleeve.

The invention will now be described in detail, by way of example, with the aid of the accompanying drawings, in which:
- fig 1 shows the safety device in an axial section, and illustrated in the delivery configuration;
- fig 2 illustrates the device according to the invention, in an axial section, and in particular an embodiment intended for fitment to delivery appliances and relative hoses incorporating a coaxially disposed internal vent duct;
- fig 3 shows the device of fig 2 in a further axial section, illustrated in the shut-off configuration;
- fig 4 is a further axial illustrating a simplified device of fig 1, in which the ball-and-socket fitting is eliminated and replaced by a nipple.

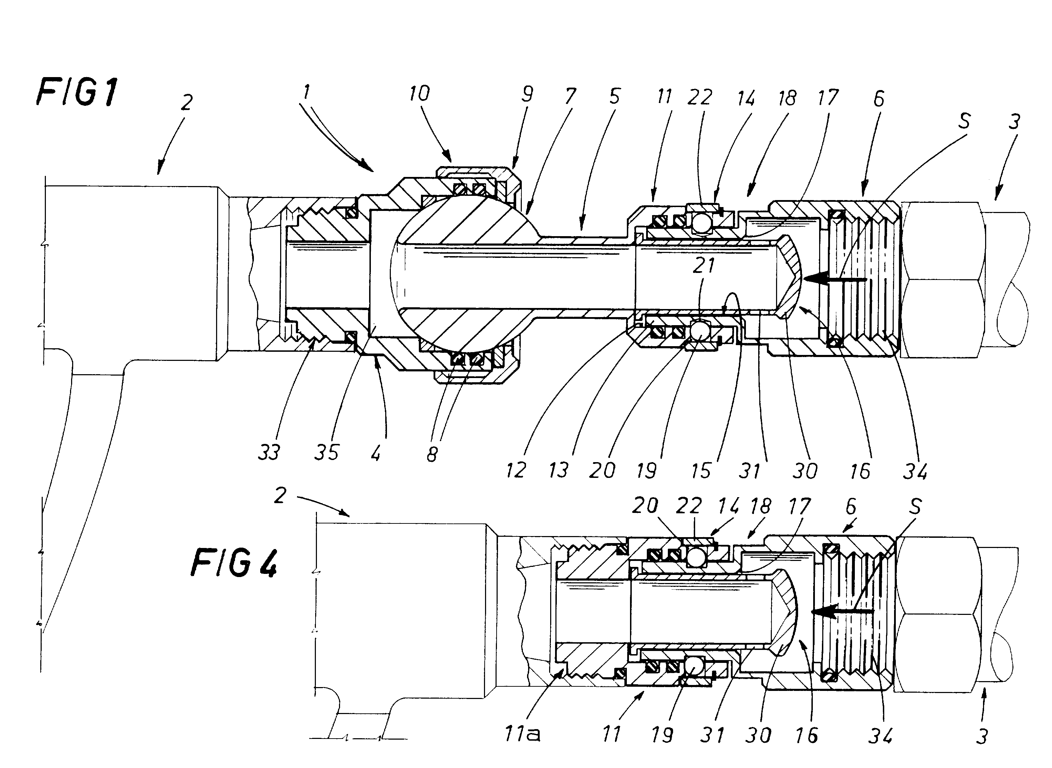

With reference to the accompanying drawings, the device according to present invention, denoted 1 in its entirety, is interposed between a pipeline or hose 3 and a delivery appliance 2 in such a way as to interconnect the two. The delivery appliance 2, indicated partially in fig 1 by the fainter lines, is recognizable as a gun of conventional embodiment typically associated with petrol pumps.

The device 1 comprises a ball-and-socket fitting 10 composed of a first outer connecting member 4, and an inner tubular member 5 of which one end affords a spherical head 7 accommodated to a fluid-tight fit internally of the first connecting member 4 and the other end terminates in a sleeve 11 designed to accommodate a tubular shank 13 afforded by a second connecting member 6, likewise to a fluid-tight fit.

The sleeve 11 and the second connecting member 6 combine to create a pull-release safety device 18, and to this end are coupled one to another by way of means 14 with the capacity to yield elastically and allow the mutual separation of the two members when overloaded by a predetermined level of tensile stress. In addition, the second connecting member 6 is designed to accommodate internal valve means 16, referred to also as a valve element for the sake of simplicity, by which the second connecting member 6 itself will be shut off and sealed, fluid-tight, if separated from the sleeve 11.

The first connecting member 4 is connected to the delivery appliance 2 by way of conventional means denoted 33, and the second connecting member 6 to the hose 3 by way of relative conventional means denoted 34. The two sets of means 33 and 34 are of matching geometry and identical to the existing means afforded by the standard hose 3 and by the delivery appliance 2, given that the device 1 is insertable between the hose and the appliance as already intimated.

The spherical head 7 occupies a relative socket 35 formed coaxially in the first connecting member 4.

This same socket 35 is fashioned with grooves or seats (not numbered) in which to locate respective sealing means 8 designed to ensure a fluid-tight interface between the first connecting member 4 and the tubular member 5. The tubular member 5 is also fitted externally with locking means 9, typically a collar, for example, which are secured to the first connecting member 4 in such a manner as to retain the spherical head 7 internally of the socket 35.

With the spherical head 7 freely rotatable inside and in fluid-tight association with the socket 35, the two assembled members 4 and 5 are duly combined as components of the ball-and-socket fitting 10.

The sleeve 11 affords an axially disposed socket 12 designed to accommodate the tubular shank 13 of the second connecting member 6 in a fluid-tight fit.

More exactly, the shank 13 and the sleeve 11 are interconnected through the aforementioned coupling means 14 in such a way as will allow their mutual release and separation in the event that a tensile stress applied between the tubular member 5 and the second connecting member 6 should reach a preset value.

In the examples of the accompanying drawings, such releasable coupling means 14 consist in a plurality of connecting elements 19 simultaneously occupying relative radial holes 20 afforded by the sleeve 11 of the tubular member 5 and respective countersunk radial seats 21 afforded by the tubular shank 13.

Such connecting elements 19 are tapered or domed at least on the side offered to the countersunk radial seats 21, in such a way as to unseat when subjected to an axially applied stress of predetermined value as aforementioned. The elements 19 in question are indicated as balls in the example of the drawings, and the depth of the countersunk radial seats 21 will be such that the balls 19 are accommodated to less than half their width, so that the intended release is assured. The balls 19 are held in place circumferentially by a retaining ring 22 possessing elastic properties, at least on the line of contact with the balls 19. The ring 22 illustrated by way of example is a split spring ring.

The axial bore 15 of the tubular shank 13 serves to accommodate the valve element 16, which is slidable along its own axis and furnished at one end with a poppet 30 designed to register against and create a fluid-tight seal with a matching annular seat 17 afforded by the shank 13. The valve element 16 is longer than the tubular shank 13, and under normal operating conditions will remain in frontal contact with the bottom of the socket 12 occupied by the shank 13, thus affording a passage from the second connecting member 6 to the tubular member 5. In the example of fig 1, the valve element 16 is tubular in embodiment, and furnished with a plurality of radially disposed through holes 31 adjacent to the poppet 30.

The stated object of the present invention is thus fully realized, in that the device 1 comprises both a ball-and-socket fitting 10 and a safety device 18 which have the inner tubular member 5 as a common component, thereby creating a single assembly. In particular, the ball-and-socket fitting 10 performs the function of reducing flexural stresses on the hose 3, whilst the safety device 18 will come into operation whenever a given level of tensile stress is transmitted through the inner tubular member 5 (hence through the delivery appliance 2) on the one hand, and through the second connecting member 6 (hence through the hose 3) on the other.

The safety device 18 will respond mainly to tensile stresses, since bending stresses are practically eliminated by the ball-and-socket fitting 10.

With regard to the operation of the device 1, any effect resulting in a rotation or deflection of the delivery appliance 2 relative to the hose 3 will be compensated by the ball-and-socket fitting 10, of which the respective components, namely the first connecting member 4 and the tubular member 5, are mutually rotatable. Should the delivery appliance 2 be subjected to a pulling force, on the other hand, such as occurs when a refuelling vehicle moves off with the gun of a self-service pump still inserted in the filler neck of its fuel tank, the resulting tensile stress will be transmitted by the tubular member 5 to the second connecting member 6 through the balls 19. The moment that the sum total of the tensile stress components transmitted thus from the bases of the single countersunk radial seats 21 to the respective balls 19 is sufficient for these to be displaced against the reaction of the retaining ring 22, the ring 22 will expand and the balls 19 are duly released from the corresponding seats 21.

At this point, there exists no further restraint to hold the tubular member 5 and the second connecting member 6 together, and the two members in question are able to separate. Throughout this process, the force of the fluid (denoted S) still being pumped through the hose 3 will continue to impinge on the valve element 16, which remains in contact with the bottom of the relative socket 12 and thus shifts as one with the tubular member 5, with the result that the radial holes 31 are progressively obscured, the poppet 30 registers ultimately in contact with the annular seat 17 afforded by the second connecting member 6, and the flow of fluid from the hose 3 is shut off.

The main advantage of the device 1 according to the invention is that it is reusable, since components are designed to separate and not to break. This is a fundamental aspect as regards economy, given that the worst probable repair requirement will be that the balls 19 need to be replaced, whereas all the other parts, including the retaining ring 22, can be reutilized with no problem whatever. With regard to the connecting elements 19, at all events, the radial holes 20 might be non-cylindrical for at least a portion of their overall length in such a manner that the balls 19 will be retained in the holes 20 when the tubular shank 13 is withdrawn.

In the case of the retaining ring 22, the use of such a component is singularly advantageous, as by simply replacing one ring with another possessing dissimilar characteristics, it becomes possible to vary the predetermined stress value at which the response of the safety device 18 is triggered.

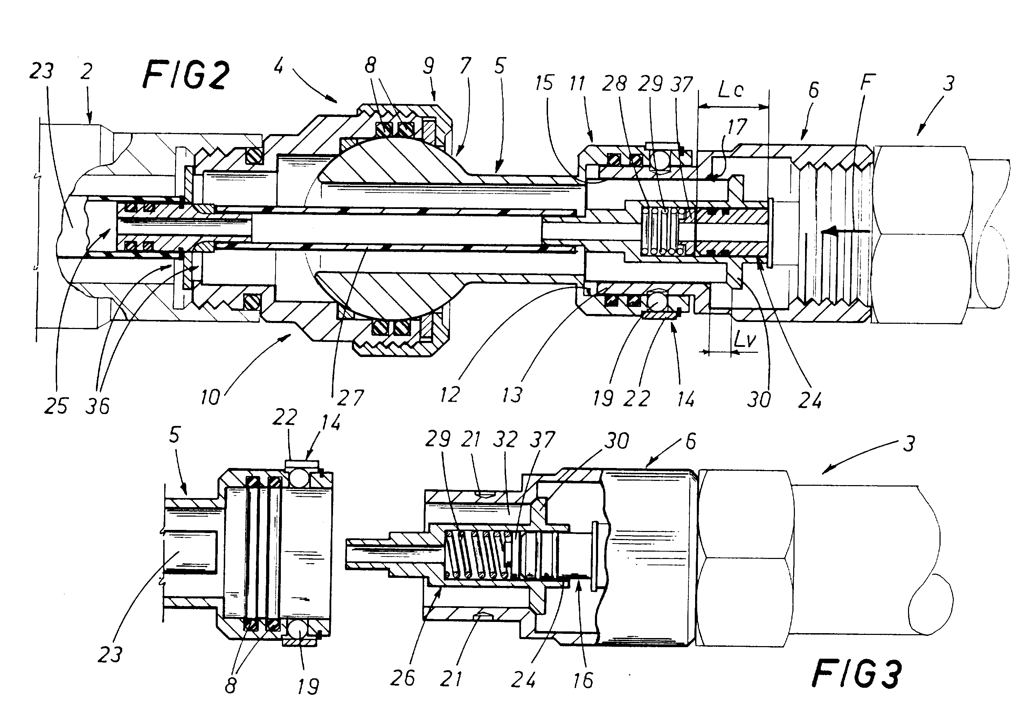

The prior art in this field, or at least, in that of fuels and filling stations, embraces delivery appliances 2 and hoses 3 equipped with respective coaxially disposed internal vent ducts 23 and 24 serving to carry away the vapours released from the pumped fuel. The device 1 according to the present invention is structured for use specifically with this type of arrangement, and one example of such an embodiment is illustrated in fig 2.

In this solution, the forwardmost end of the first outer connecting member 4 carries a fitting 25, secured by a pair of star elements 36, such as can be connected on the one hand to the coaxial vent duct 23 of the delivery appliance 2 and on the other to a flexible duct 27 positioned internally of the inner tubular member 5.

The valve element 16 in this type of embodiment consists in a tubular stem 26 and, radiating out from the stem, a plurality of longitudinal fins 32 accommodated slidably in the axial bore 15 of the tubular shank 13. The tubular stem 26 is connected by one end to the flexible duct 27, whilst the remaining end affords an axial socket 28 in which the vent duct 24 of the hose 3 is insertable to a fluid-tight fit. This same axial socket 28 also accommodates spring means 29, for example a coil spring as illustrated in figs 2 and 3, interposed between the bottom of the socket 28 and a stop washer 37 against which the free end of the vent duct 24 impinges. Likewise in this instance, the valve element 16 is embodied with a poppet 30 disposed peripherally in relation to the tubular stem 26 and associated with one end of the set of longitudinal radial fins 32. The device 1 is shown in fig 2 in the delivery configuration, with the poppet 30 at a given distance Lv from the annular seat 17, and the axial duct 24, as considered with reference to its outermost seal, inserted into the axial socket 28 to a depth denoted Lc. Observing fig 2 it will be seen that this latter distance Lc is notably greater than the former distance Lv, an important feature inasmuch as the valve element 16 must be capable of withdrawing a certain way from the vent duct 24 without the sealing action between the vent duct and the tubular stem 26 being lost, otherwise the flow of fuel would not be safely cut off, but instead would find a passage into the vent duct 24.

The spring means 29 operate in conjunction with the flow of fuel to reduce the operating time of the valve element 16 since, comparing fig 1 and fig 2, the surface of the poppet 30 invested by the fluid as indicated in fig 1 is decidedly larger than that discernible in the embodiment of fig 2.

As regards operation, when the connecting members 4 and 6 are subjected to an axial load greater than the rated radial load of the retaining ring 22, not only will the sleeve 11 separate from the tubular shank 13, but the flexible duct 27 also separates from the fitting 25 or from the tubular stem 26, as discernible in fig 3; in this instance the valve element 16 is forced into the position of contact with the annular seat 17 both by the pressure S of the fluid flowing through the hose 3 and by the elastic force of the spring 29.

Returning to the device 1 illustrated in fig 1, a further option exists as shown in fig 4, where the ball-and-socket fitting 10 is replaced by a nipple 11a integral with the sleeve 11. Therefore, the nipple 11a will be seen to coincide for practical purposes with the first connecting member 4 of the ball-and-socket fitting 10.

## Claims

1. A device (1) in combination with a fluid pipeline (3) and a delivery appliance (2), the device being connected between the fluid pipeline and the delivery appliance by means of a first outer connecting member (4) and a second connecting member (6), the device comprising
a ball-and-socket fitting (10) composed of the first outer connecting member (4), and a tubular member (5) of which one end affords a spherical head (7) accommodated to a fluid-tight fit internally of the first connecting member (4) and the remaining end terminates in a sleeve (11) designed to accommodate, in a fluid-tight fit, a tubular shank (13) of the second connecting member (6);
the sleeve (11) and the second connecting member (6) forming two parts of a pull-release safety device (18), associated one with another by way of coupling means (14) designed to yield elastically and allow a mutual separation of the two parts when subjected to a predetermined tensile overload;
comprising valve means (16), located internally of the second connecting member (6), by which the selfsame second connecting member is shut off and sealed fluid-tight when separated from the sleeve (11),
characterized in that said delivery appliance (2) and said pipeline (3) are respectively furnished with an axial vent duct (23, 24), wherein the first connecting member (4) comprises a rigidly associated fitting (25), connected to the axial vent duct (23) of the delivery appliance (2) and to a flexible duct (27) positioned internally of the tubular member (5), and said valve means (16) are in fluid-tight association with the axial vent duct (24) of the pipeline (3) and with the flexible duct (27), and that spring means (29) are interposed between the duct (24) and a socket (28) of the valve means (16) in order to operate in such a manner as to bring about the closure of the valve means (16, without occasioning the complete withdrawal of the axial vent duct (24) of the pipeline (3) from the axial socket (28) of the valve means (16).

2. A device as in claim 1, wherein the sleeve (11) of the tubular member (5) affords an axial socket (12) such as will accommodate the tubular shank (13) of the second connecting member (6) to a fluid-tight fit, and the valve means (16) are accommodated by the axial bore (15) of the tubular shank (13) of the second connecting member (6) with freedom of axial sliding movement so as to enable alternation between a delivery position in which axial movement is disallowed and the valve means (16) are caused to locate in contact with the bottom of the axial socket (12) of the sleeve (11), thereby affording a passage to the tubular member (5) from the pipeline (3), and a shut-off position assumed when the sleeve (11) of the tubular member (5) is distanced from the tubular shank (13) of the second connecting member (6) by the separation of the coupling means (14), in which the valve means (16) are caused to register in fluid-tight contact against an annular seat (17) afforded internally by the second connecting member (6), thereby occluding the latter.

3. A device as in claim 1, wherein coupling means (14) consist in a plurality of connecting elements (19) slidably accommodated in corresponding radial holes (20) afforded by the sleeve (11) of the tubular member (5), each affording at least one tapered or domed portion accommodated simultaneously in one of a corresponding plurality of countersunk radial seats (21) afforded by the tubular shank (13) of the second connecting member (6), and restrained thus elastically in the countersunk radial seats (21) of the second connecting member (6) by a retaining ring (22) encircling the sleeve (11) of the tubular member (5) and radially expandable at least in the areas of contact with the connecting elements (19).

4. A device as in claim 3, wherein the connecting elements (19) are balls.

5. A device as in claim 3, wherein the retaining ring (22) is a split spring ring.

6. A device as in claim 1, wherein the first connecting member (4) comprises the fitting (25) which is coaxial, and the valve means (16) consist in an axially disposed tubular element (26) connected in fluid-tight association with the axial vent duct (24) of the pipeline (3) on the one hand, and with the flexible duct (27) on the other.

7. A device as in claim 6, wherein the axial vent duct (24) of the pipeline (3) is inserted into socket (28) afforded by the tubular element (26) of the valve means (16), accommodated to a fluid-tight fit and impinging compressively on said spring means (29) interposed between the duct (24) and the socket (28) and operating in conjunction with a liquid directed through the pipeline (3) in such a manner as to bring about the closure of the valve means (16) without occasioning the complete withdrawal of the axial vent duct (24) of the pipeline (3) from the axial socket (28) of the valve means (16).

8. A device as in claim 1, wherein valve means (16) are embodied as a tubular element accommodated with freedom of axial sliding movement by the axial bore (15) of the second connecting member (6), stopped at one end by a poppet (30) designed to register in fluid-tight contact with the corresponding annular seat (17) of the second connecting member (6).

9. A device as in claim 7, wherein valve means (16) exhibit a plurality of radial fins (32) accommodated with freedom of axial sliding movement by the axial bore (15) of the second connecting member (6), and a poppet (30) at one end designed to register in fluid-tight contact with the corresponding annular seat (17) of the second connecting member (6).

## Patentansprüche

1. Eine Vorrichtting (1) in Kombination mit einer Flüssigkeitsleitung (3) und einem Abgabesystem (2), wobei die Vorrichtung zwischen der Flüssigkeitsleitung und dem Abgabesystem mit Hilfe eines ersten Anschlusselementes (4) und eines zweiten Anschlusselementes (6) angeschlossen wird, und wobei die Vorrichtung wie folgt enthält: eine Kugelzapfenverbindung (10), bestehend aus dem ersten äusseren Anschlusselement (4), sowie ein rohrförmiges Element (5), dessen eines Ende einen Kugelkopf (7) aufweist, flüssigkeitsdichtend angeordnet im Inneren des ersten Anschlusselementes (4), und dessen verbleibendes Ende in einer Buchse (11) ausläuft, die dazu bestimmt ist, auf flüssigkeitsdichtende Weise einen rohrförmigen Schaft (13) des zweiten Anschlusselementes (6) aufzunehmen; wobei die Buchse (11) und das zweite Anschlusselement (6) zwei Teile einer Zug-Freigabe-Sicherheitsvorrichtung (18) bilden, die durch Kupplungsmittel (14) miteinander verbunden und dazu bestimmt sind, elastisch nachzugeben und das gegenseitige Trennen der beiden Teile zu erlauben, wenn diese einer bestimmten Zugüberlastung unterliegen; enthaltend Ventilmittel (16), angeordnet im Inneren des zweiten Anschlusselementes (6), durch welche dasselbe zweite Anschlusselement flüssigkeitsdichtend verschlossen wird, wenn es von der Buchse (11) getrennt ist, **dadurch gekennzeichnet**, dass das genannte Abgabesystem (2) und die genannte Flüssigkeitsleitung (3) jeweils mit einer axialen Entlüftungsleitung (23, 24) versehen sind, wobei das erste Anschlusselement (4) ein starr mit ihm verbundenes Verbindungsstück (25) enthält, angeschlossen an die axiale Entlüftungsleitung (23) des Abgabesystems (2) und an eine flexible Leitung (27), die im Inneren des rohrförmigen Elementes (5) angeordnet ist, und die genannten Ventilmittel (16) flüssigkeitsdichtend mit der axialen Entlüftungsleitung (24) der Flüssigkeitsleitung (3) und mit der flexiblen Leitung (27) verbunden sind, und dadurch, dass Federmittel (29) zwischen der Leitung (24) und dem Sitz (28) der Ventilmittel (16) eingesetzt sind, um auf solche Weise zu arbeiten, dass die Ventilmittel (16) verschlossen werden, ohne dabei das komplette Herausziehen der axialen Entlüftungsleitung (24) der Flüssigkeitsleitung (3) aus dem axialen Sitz (28) der Ventilmittel (16) zu bewirken.

2. Vorrichtung nach Patentanspruch 1, bei welcher die Buchse (11) des rohrförmigen Elementes (5) einen axialen Sitz (12) aufweist, und zwar solcher, der flüssigkeitsdichtend den rohrförmigen Schaft (13) des zweiten Anschlusselementes (6) aufnehmen kann, wobei die Ventilmittel (16) in der axialen Bohrung (15) des rohrförmigen Schaftes (13) des zweiten Anschlusselementes (6) aufgenommen sind, in der Lage, eine freie Gleitbewegung auszuführen und so einen Wechsel zu bewirken, und zwar zwischen einer Abgabeposition, in welcher die axiale Bewegung verhindert ist und die Ventilmittel (16) in Kontakt mit dem Boden des axialen Sitzes (12) der Buchse (11) gebracht sind, wobei ein Durchlass von der Flüssigkeitsleitung (3) zu dem rohrförmigen Element (5) geboten wird, und einer Verschlussposition, die eingenommen wird, wenn die Buchse (11) des rohrförmigen Elementes (5) von dem rohrförmigen Schaft (13) des zweiten Anschlusselementes (6) durch die Trennung der Kupplungsmittel (14) entfernt ist, und in welcher die Ventilmittel (16) flüssigkeitsdichtend an einem ringförmigen Sitz (17) anliegen, aufgewiesen von dem zweiten Anschlusselement (6) in dessen Innerem, und letzteres dabei verschliessen.

3. Vorrichtung nach Patentanspruch 1, bei welcher die Kupplungsmittel (14) aus einer Anzahl von Verbindungselementen (19) bestehen, die gleitbar in entsprechenden radialen Bohrungen (20) angeordnet sind, letztere aufgewiesen von der Buchse (11) des rohrförmigen Elementes (5), und von denen jedes wenigstens einen verjüngten oder gewölbten Abschnitt enthält, der gleichzeitig in einem der entsprechenden Anzahl von versenkten radialen Sitzen (21) angeordnet wird, aufgewiesen von dem rohrförmigen Schaft (13) des zweiten Anschlusselementes (6), und folglich elastisch in den versenkten radialen Sitzen (21) des zweiten Anschlusselementes (6) durch einen Haltering (22) festgehalten, welcher die Buchse (11) des rohrförmigen Elementes (5) umfasst und wenigstens in den Kontaktbereichen mit den Verbindungselementen (19) radial expandierbar ist.

4. Vorrichtung nach Patentanspruch 3, bei welcher die Verbindungselemente (19) Kugeln sind.

5. Vorrichtung nach Patentanspruch 3, bei welcher der Haltering (22) ein Spaltfederring ist.

6. Vorrichtung nach Patentanspruch 1, bei welcher das erste Anschlusselement (4) das Verbindungsstück (25) enthält, welches koaxial verläuft, und die Ventilmittel (16) aus einem axial angeordneten rohrförmigen Element (26) bestehen, flüssigkeitsdichtend verbunden mit der axialen Entlüftungsleitung (24) der Flüssigkeitsleitung (3) auf der einen Seite und mit der flexiblen Leitung (27) auf der anderen Seite.

7. Vorrichtung nach Patentanspruch 6, bei welcher die axiale Entlüftungsleitung (24) der Flüssigkeitsleitung (3) in einen Sitz (28) eingesetzt ist, der von dem rohrförmigen Element (26) der Ventilmittel (16) aufgewiesen wird, und zwar in einer flüssigkeitsdichtenden Verbindung und einen Druck auf die genannten Federmittel (29) ausübend, die zwischen der Leitung (24) und dem Sitz (28) angeordnet sind, und auf solche Weise mit einer durch die Flüssigkeitsleitung (3) geleiteten Flüssigkeit zusammenarbeitend, dass dies zum Verschliessen der Ventilmittel (16) führt, ohne dass das komplette Herausziehen der axialen Entlüftungsleitung (24) der Flüssigkeitsleitung (3) aus dem axialen Sitz (28) der Ventilmittel (16) bewirkt wird.

8. Vorrichtung nach Patentanspruch 1, bei welcher Ventilmittel (16) als ein rohrförmiges Element ausgebildet sind, angeordnet mit der Möglichkeit der freien Gleitbewegung durch die axiale Bohrung (15) des zweiten Anschlusselementes (6) und verschlossen an einem Ende durch einen Kopf (30), welcher dazu bestimmt ist, flüssigkeitsdichtend an dem entsprechenden ringförmigen Sitz (17) des zweiten Anschlusselementes (6) anzuliegen.

9. Vorrichtung nach Patentanspruch 7, bei welcher Ventilmittel (16) eine Anzahl von radialen Flügeln (32) aufweisen, die mit der Möglichkeit einer axialen Gleitbewegung durch die axiale Bohrung (15) des zweiten Anschlusselementes (6) angeordnet sind, sowie einen Kopf (30) an einem Ende, der dazu bestimmt ist, flüssigkeitsdichtend an dem entsprechenden ringförmigen Sitz (17) des zweiten Anschlusselementes (6) anzuliegen.

## Revendications

1. Dispositif (1) associé avec une canalisation de fluide (3) et un système d'alimentation (2), le dispositif étant relié entre la canalisation de fluide et le système d'alimentation par l'intermédiaire d'un premier élément de raccord externe (4) et d'un deuxième élément de raccord (6),
le dispositif comprenant
un raccord à articulation sphérique (10) constitué par le premier élément de raccord externe (4) et un corps tubulaire (5) doté, à une extrémité, d' une tête sphérique (7) logée de manière étanche à l'intérieur du premier élément de raccord (4) et, à l'autre extrémité, d'un manchon (11) destiné à recevoir, de manière étanche, une tige tubulaire (13) présentée par le deuxième élément de raccord (6);
le manchon (11) et le deuxième élément de raccord (6) formant deux parties d'un dispositif de sécurité (18) à relâchement par traction, reliées entre elles par l'intermédiaire de moyens de couplage (14) destinés à fléchir de manière élastique et à permettre une séparation réciproque des deux parties quand elles sont soumises à une surcharge de traction préétablie;
et comprenant aussi des moyens d'obturation (16), placés à l'intérieur du deuxième élément de raccord (6) et destinés à fermer hermétiquement ce même deuxième élément de raccord quand il est séparé du manchon (11), caractérisé en ce que ledit système d'alimentation (2) et ladite canalisation (3) sont pourvus d'un conduit axial de mise à air libre respectif (23, 24), où le premier élément de raccord (4) comprend un raccord (25) qui est solidaire de manière rigide au conduit axial de mise à air libre (23) du système d'alimentation (2) et à un conduit flexible (27) placé à l'intérieur du corps tubulaire (5), et lesdits moyens d'obturation (16) sont associés de manière étanche avec le conduit axial de mise à air libre (24) de la canalisation (3) et avec le conduit flexible (27), et en ce que des moyens élastiques (29) sont placés entre le conduit (24) et une douille (28) des moyens d'obturation (16) de façon à causer la fermeture de ces moyens d'obturation (16), sans entraîner le retrait complet du conduit axial de mise à air libre (24) de la canalisation (3) de la douille axiale (28) des moyens d'obturation (16).

2. Dispositif selon la revendication 1, dans lequel le manchon (11) du corps tubulaire (5) présente une douille axiale (12) destinée à recevoir, de manière étanche, la tige tubulaire (13) du deuxième élément de raccord (6), les moyens d'obturation (16) étant logés dans l'orifice axial (15) de la tige tubulaire (13) du deuxième élément de raccord (6) de façon à pouvoir coulisser axialement et à alterner entre une position d'alimentation dans laquelle tout mouvement axial est impossible et les moyens d'obturation (16) viennent se placer contre le fond de la douille axiale (12) du manchon (11), définissant ainsi un passage de communication entre le corps tubulaire (5) et la canalisation (3), et une position de fermeture prise quand le manchon (11) du corps tubulaire (5) est éloigné de la tige tubulaire (13) du deuxième élément de raccord (6) par séparation des moyens de couplage (14), dans laquelle les moyens d'obturation (16) sont amenés en butée étanche contre un logement annulaire (17) présenté intérieurement par le deuxième élément de raccord (6), entraînant ainsi la fermeture de ce dernier.

3. Dispositif selon la revendication 1, dans lequel les moyens de couplage (14) consistent en une pluralité d'éléments de connexion (19) logés de manière coulissante dans des trous radiaux correspondants (20) présentés par le manchon (11) du corps tubulaire (5), chacun de ces éléments de connexion présentant au moins une portion effilée ou en forme de dôme logée simultanément dans un logement faisant partie d'une pluralité de logements radiaux évasés correspondants (21) présentés par la tige tubulaire (13) du deuxième élément de raccord (6), et retenu de manière élastique dans les logements radiaux évasés (21) du deuxième élément de raccord (6) par une bague de retenue (22) encerclant le manchon (11) du corps tubulaire (5) et pouvant s'étendre radialement au moins dans les zones de contact avec les éléments de connexion (19).

4. Dispositif selon la revendication 3, dans lequel les éléments de connexion (19) sont des billes.

5. Dispositif selon la revendication 3, dans lequel la bague de retenue (22) est une bague élastique ouverte.

6. Dispositif selon la revendication 1, dans lequel le premier élément de raccord (4) comprend le raccord (25), qui est coaxial, et les moyens d'obturation (16) consistent en un corps tubulaire (26) placé de manière axiale et relié, de manière étanche, au conduit axial de mise à air libre (24) de la canalisation (3) d'une part, et au conduit flexible (27) d'autre part.

7. Dispositif selon la revendication 6, dans lequel le conduit axial de mise à air libre (24) de la canalisation (3) est introduit de manière étanche dans une douille (28) présentée par le corps tubulaire (26) des moyens d'obturation (16), comprime lesdits moyens élastiques (29) placés entre le conduit (24) et la douille (28) et agit avec le liquide alimenté dans la canalisation (3) de façon à occasionner la fermeture des moyens d'obturation (16) sans entraîner le retrait complet du conduit axial de mise à air libre (24) de la canalisation (3) de la douille axiale (28) des moyens d'obturation (16).

8. Dispositif selon la revendication 1, dans lequel les moyens d'obturation (16) consistent en un corps tubulaire qui est logé de manière à pouvoir coulisser axialement dans l'orifice axial (15) du deuxième élément de raccord (6), et fermé à une extrémité par une tête (30) destinée à assurer un contact étanche avec le logement annulaire correspondant (17) du deuxième élément de raccord (6).

9. Dispositif selon la revendication 7, dans lequel les moyens d'obturation (16) présentent une pluralité d'ailettes radiales (32) logées de manière à pouvoir coulisser axialement dans l'orifice axial (15) du deuxième élément de raccord (6), et une tête (30) à une extrémité destinée à assurer un contact étanche avec le logement annulaire correspondant (17) du deuxième élément de raccord (6).
